**Europäisches Patentamt**

**European Patent Office**

**Office européen des brevets**

(19)

(11) Veröffentlichungsnummer : **0 391 895 B1**

# EUROPÄISCHE PATENTSCHRIFT

(12)

(45) Veröffentlichungstag der Patentschrift :
**13.05.92 Patentblatt 92/20**

(21) Anmeldenummer : **88902400.6**

(22) Anmeldetag : **17.03.88**

(86) Internationale Anmeldenummer :
**PCT/DE88/00161**

(87) Internationale Veröffentlichungsnummer :
**WO 88/06941 22.09.88 Gazette 88/21**

(51) Int. Cl.⁵ : **B23P 15/00,** // G02B5/18,
B01D39/10, F28D9/00

(54) **VERFAHREN ZUR HERSTELLUNG VON FEINSTRUKTURKÖRPERN.**

(30) Priorität : **20.03.87 DE 3709278**

(43) Veröffentlichungstag der Anmeldung :
**17.10.90 Patentblatt 90/42**

(45) Bekanntmachung des Hinweises auf die
Patenterteilung :
**13.05.92 Patentblatt 92/20**

(84) Benannte Vertragsstaaten :
**AT CH FR GB IT LI NL SE**

(56) Entgegenhaltungen :
**FR-A- 2 279 514**
**US-A- 1 662 870**
**US-A- 4 277 966**

(73) Patentinhaber :
**KERNFORSCHUNGSZENTRUM KARLSRUHE**
**GMBH**
**Weberstrasse 5 Postfach 3640**
**W-7500 Karlsruhe 1 (DE)**
Patentinhaber :
**MESSERSCHMIDT-BOLKOW-BLOHM**
**Postfach 801169**
**W-8000 Munchen 80 (DE)**

(72) Erfinder : **SCHUBERT, Klaus**
**Geigersbergerstr. 54**
**W-7500 Karlsruhe (DE)**
Erfinder : **BIER, Wilhelm**
**Grabener Weg 10**
**W-7514 Eggenstein-Leopoldshafen (DE)**
Erfinder : **LINDER, Gerd**
**Stephan Lochner Weg 2**
**W-7500 Karlsruhe 31 (DE)**
Erfinder : **SCHMID, Peter**
**Waldperlacher Str. 11**
**W-8000 München 83 (DE)**
Erfinder : **BICHLER, Peter**
**Sonnenleite 17**
**W-8913 Schondorf (DE)**
Erfinder : **BRUNNER, Winfried**
**Oskar von Miller Str. 25**
**W-8025 Unterhaching (DE)**
Erfinder : **SIMON, Wolfgang**
**Schuhmannstr. 14**
**W-8000 München 80 (DE)**

(74) Vertreter : **Gottlob, Peter**
**Kernforschungszentrum Karlsruhe GmbH**
**Stabs. Patente und Lizenzen Weberstrasse 5**
**W-7500 Karlsruhe 1 (DE)**

EP 0 391 895 B1

**Beschreibung**

Die Erfindung betrifft Verfahren zur Herstellung von Feinstrukturkörpern gemäß den Oberbegriffen der Patentansprüche 1 und 2.

Aus der US-A-4,277,966 ist ein gattungsgemäßes Verfahren zur Herstellung von Vielkanalplatten für optische Zwecke bekannt. Dabei werden in eine streifenförmige Folie quer zu deren Längserstreckung mit einem diamant-bestückten Schneidwerkzeug eine Vielzahl paralleler Nuten eingeritzt, worauf die Folie nach einer Oberflächenbehandlung zu einem spulenförmigen Körper gewickelt wird. Anstelle des Wickelns kann die Folie auch in vorgebbare Streifenlängen zerschnitten werden, die zu dem Körper gestapelt werden. Die Folie wird schrittweise bewegt und während des Nutens in einer konventionellen Vakuumspannvorrichtung festgehalten. Mit dieser Methode läßt sich bei einer Foliendicke von 100 μm, einer Folienbreite von 5 cm und einer Schrittweite von etwa 50 μm eine Transparenz des Körpers von 25 % erzielen. Mit einer konventionellen Vakuumspannvorrichtung läßt sich jedoch kein gleichförmiger Haftdruck erreichen, so daß Toleranzen im μm-Bereich, wie sie bei höherer Transparenz und entsprechend geringen Wandstärken zwischen benachbarten Durchbrüchen gefordert werden, nicht mehr realisiert werden können. Nachteilig ist ferner, daß jede Nut nur zu einem einzigen Kanal in der Vielkanalplatte führt, so daß für dessen Herstellung eine riesige Zahl von Einzelnuten in die Folie eingearbeitet werden müssen. Hinzu kommt, daß das Vakuum nach jeder Nutfertigung aufgehoben, die Folie definiert verschoben und sodann das Vakuum für die nächste Nutfertigung neu erzeugt werden muß.

Der Erfindung liegt die Aufgabe zugrunde, Verfahren zur Herstellung von Feinstrukturkörpern der gattungsgemäßen Art aufzuzeigen, mit denen die vorerwähnten Schwierigkeiten überwunden werden können und die es daher gestatten, eine Vielzahl eng benachbarter, kanalartiger Durchbrüche mit über die Länge konstantem Querschnitt, hoher Präzision und Oberflächengüte in diesen Körpern zu erzeugen, wobei die Querschnittsform und die Anordnung der Durchbrüche in weiten Grenzen frei wählbar sind, die Formgenauigkeit der Querschnitte im Tausendstelmillimeter-Bereich und die kleinsten Wandstärken zwischen benachbarten Durchbrüchen im Hundertstelmillimeter-Bereich liegen.

Zur Lösung dieser Aufgabe werden die im Kennzeichen der Patentansprüche 1 und 2 enthaltenen Maßnahmen vorgeschlagen, die auf demselben Lösungsprinzip beruhen.

Mit der Erfindung lassen sich in den Feinstrukturkörpern mit hoher Maßhaltigkeit je nach Schliff des Formdiamanten neben runden auch vieleckige oder kreuzschlitzförmige Durchbrüche bis herab zu 20 μm Kantenlänge erzeugen. Durch die glatte Oberfläche wird die Gefahr von Ablagerungen beträchtlich reduziert; die mittlere Rauhtiefe der Oberfläche ist normalerweise kleiner 0,05 μm.

Die so erhaltenen Feinstrukturkörper besitzen bei einer optischen Transparenz größer 50 % eine spezifische Oberfläche von ca. 20.000 bis 40.000 m²/m³, wobei die Tiefe der Körper praktisch frei bestimmbar ist. Somit ergibt sich eine vielzahl von möglichen Anwendungsgebieten. Bereits genannt wurden Wärmetauscher für Flüseigkeiten und Gase. Darunter fallen auch sogenannte beat-Pipes zum Kühlen oder Heizen von Mikro-Bauelementen.

Weitere Anwendungsgebiete sind mechanische Feinfilter, aber auch optische Gitter, beispielsweise Röntgenlichtspeicherfolien.

Die nunmehr mögliche Herstellung von exakt definierbaren Querschnittsformen im μm-Bereich erschließt auch neue Anwendungen bei der Fertigung von Fäden, Drähten etc. Konkrete Beispiele hierfür sind Spinndüsenplatten. Aufgrund der großen spezifischen Oberflächen eignen sich erfindungsgemäß hergestellte Strukturen auch als Katalysatorträger oder als Trägerflächen für Mikroorganismen.

Ausführungsbeispiele der Erfindung werden im folgenden anhand der Zeichnungen erläutert:

Die **Fig.1** zeigt eine Vorrichtung mit einer über den Dorn einer Drehmaschine gespannten Folie während der Bearbeitung;

die **Fig.2** zeigt eine Vorrichtung mit einer auf einen X-Y-Tisch aufgespannten Folie während der Bearbeitung:

die **Fig.3** zeigt einen aus gestapelten Folien bestehenden Feinstrukturkörper mit rechteckigen Durchbrüchen;

die **Fig.4** zeigt einen aus gestapelten Folien bestehenden Feinstrukturkörper mit runden Durchbrüchen,

die **Fig.5** zeigt einen Feinstrukturkörper mit kreuzschlitzförmigen Durchbrüchen;

die **Fig.6a/6b** zeigen einen Feinstrukturkörper als Kreuzstromwärmetauscher;

die **Fig.7** zeigt einen Feinstrukturkörper mit Durchbrüchen, die einen "birnenförmigen" Querschnitt haben.

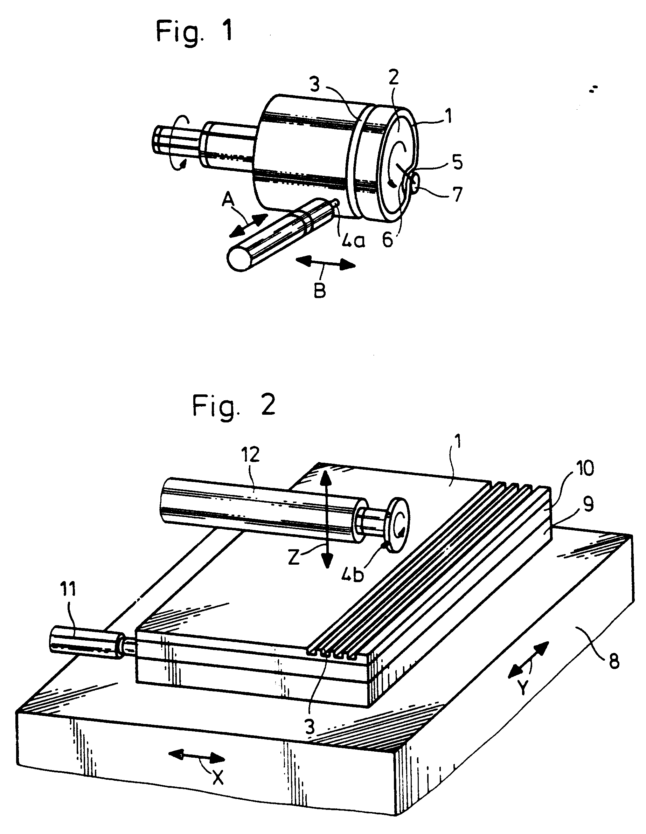

Gemäß der in Fig.1 dargestellten Vorrichtung ist eine metallische Folie 1 um den Dorn 2 einer Drehmaschine gespannt, so daß die Nuten 3 mit dem Formdiamanten 4a mittels eines Feinstellvorschubs (Pfeil A,B) nacheinander eingebracht werden können. Die Stoßkanten 5 der Folie 1 sind überlappend miteinander verbunden, z.B. durch Schweißung, wobei der Bereich der Schweißung mittels einer Spannvorrichtung 7 in eine Ausnehmung 6 des Dorns 2 der Drehmaschine hineingedrückt ist, wobei auch die Spannvorrichtung 7 innerhalb dieser Ausnehmung liegt.

Gemäß der in Fig. 2 dargestellten Vorrichtung ist die Folie 1 auf einem Bearbeitungstisch 8 mit Hilfe einer geschliffenen Sintermetallplatte 10 einer Vakuumspannvorrichtung 9 aufgespannt, die an eine Vakuumleitung 11 angeschlossen ist. Der Bearbeitungstisch 8 kann in zwei zueinander senkrechten Richtungen (X,Y) gegenüber einem auf einer Frässpindel 12 fixierten Formdiamanten 4b bewegt werden, der in Z-Richtung verstellbar ist. Anstelle der in Fig. 2 dargestellten Horizontal-Fräsanordnung mit Frässpindel 12 können der oder die Formdiamanten 4b auch an einem Räumwerkzeug angeordnet sein. Die kinematische Zuordnung von Werkzeug und Werkstück ist'ebenfalls nur beispielhaft, das Fräs- oder Räumwerkzeug kann ebenfalls in X- und/oder Y-Richtung beweglich sein, auch der Bearbeitungstisch 8 könnte in Z-Richtung verfahrbar sein.

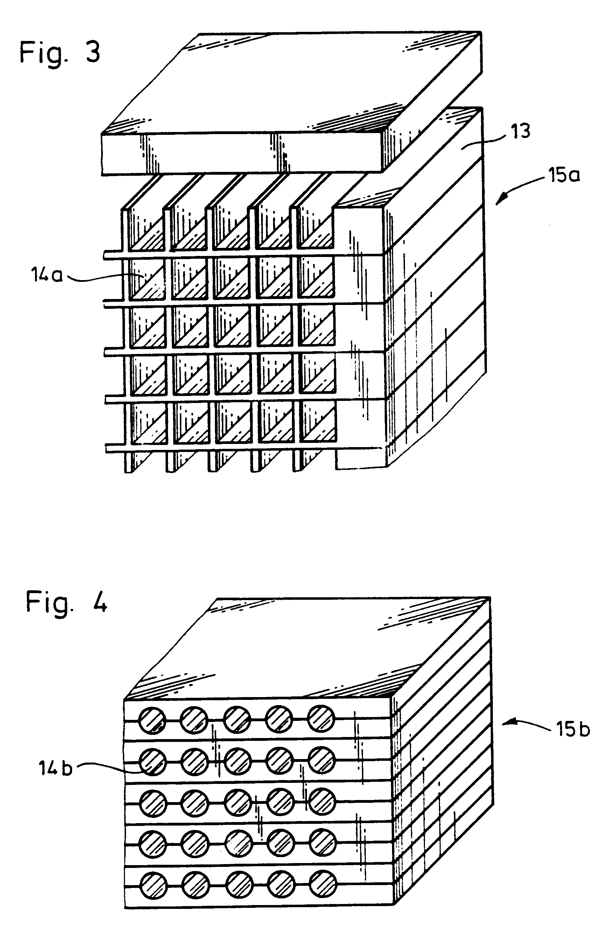

Nach dem Einarbeiten der Nuten 3 wird die Folie 1 in vorzugsweise rechteckige Abschnitte 13 gewünschter Länge und Breite zerschnitten. Diese Abschnitte 13 bilden gemäß Figur 3 durch Stapelung den gewünschten Feinstrukturkörper 15a, bei dem die Durchbrüche 14a beispielhaft aus rechteckigen Kanälen mit einer Kantenlänge bis herab zu 20 $\mu$m bei einer Wandstärke von ca. 15 $\mu$m bestehen. Damit läßt sich eine Anzahl von mehr als 10 000 Kanälen pro cm$^2$ Querschnittsfläche erzielen.

Gemäß Fig. 4 ist es auch möglich, die Durchbrüche 14b eines Feinstrukturkörpers 15b rund zu gestalten, indem Folien mit halbreisförmigen Nuten jeweils spiegelbildlich gestapelt werden.

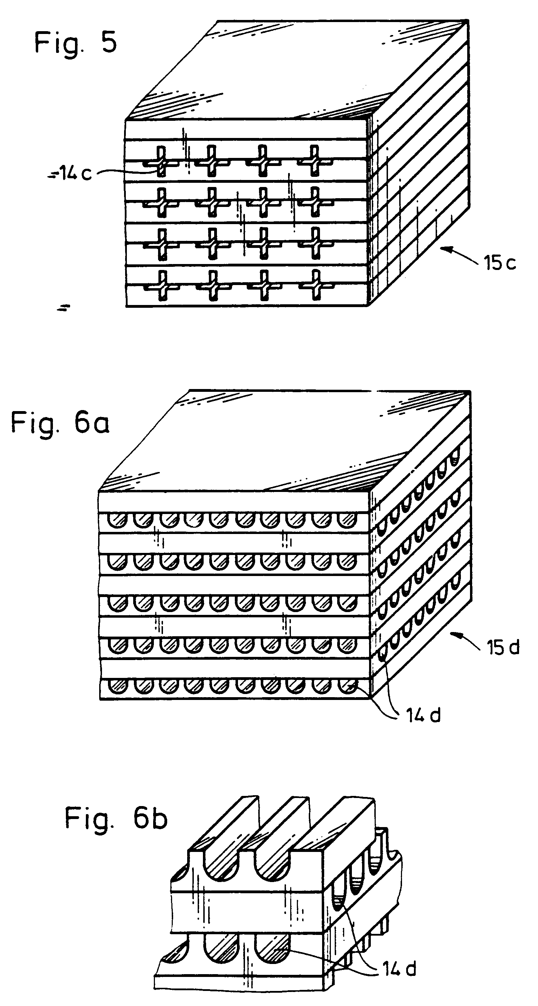

Gemäß Fig. 5 erhalten die Durchbrüche 14c eines Feinstrukturkörpers 15c eine kreuzschlitzförmige Struktur, indem ein Teil der Folien mit zwei rechteckigen Formdiamanten (mit einem breiten und einem schmalen) nacheinander bearbeitet wird; danach werden diese Folien jeweils spiegelbildlich mit einfach bearbeiteten Folien zusammengefaßt.

Stapelt man die Folien 1 hinsichtlich ihrer Nutenausrichtung 14d abwechselnd um 90° gegeneinander versetzt, so entsteht gemäß Figur 6a ein Feinstrukturkörper 15d, der als Kreuzstromwärmetauscher einsetzbar ist. Fig 6b zeigt einen Ausschnitt dieses Feinstrukturkörpers in vergrößertem Maßstab.

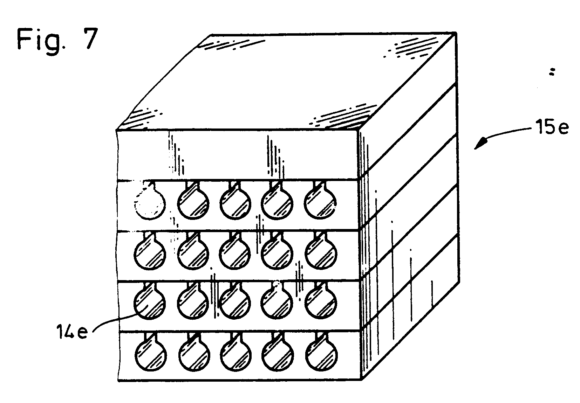

Bearbeitet man die Folien mit auf einem Räumwerkzeug angebrachten Formdiamanten, indem man zunächst eine rechteckige Nut einarbeitet und sodann den unteren Teil der Nutwände mit z.B. halbkreisförmigen Formdiamanten bearbeitet, so erhält man gem. Fig. 7 einen Feinstrukturkörper 15e mit "birnenförmigen" Nutquerschnitten 14e. Dieser Körper zeigt anschaulich, daß die Querschnittsform der Kanäle bzw. der Kanalwände praktisch frei vorgebbar ist, wobei auch Hinterschnitte erzeugbar sind bzw. Nutquerschnittsformen, bei denen eine oder beide Nutwände oder ein Teil der Wände konkav oder konvex ausgebildet sind.

Die gestapelten Folien 1 können zwischen Deckplatten in bekannter Weise zusammengefaßt gehalten sein. Außerdem ist es auch möglich, die übereinandergeschichteten Folien 1 durch Kleben, Löten oder Schweißen, vorzugsweise Diffusionslöten oder -schweißen miteinander zu verbinden. Neben den dargestellten Querschnittsformen sind selbstverständlich auch andere, z.B. trapez- oder sechseckförmige Querschnitte realisierbar. An Stelle von metallischen Folien können auch solche aus anderen zerspanbaren Materialien verwendet werden wie z.B. Kunststoffe oder Halbleiter.

Bezugszeichenliste

| | |
|---|---|
| 1 | Folie |
| 2 | Dorn |
| 3 | Nuten |
| 4a,b | Formdiamant |
| 5 | Stoßkanten |
| 6 | Ausnehmung |
| 7 | Spannvorrichtung |
| 8 | Bearbeitungstisch |
| 9 | Vakuumspannvorrichtung |
| 10 | Sintermetallplatte |
| 11 | Vakuumleitung |
| 12 | Frässpindel |
| 13 | Abschnitte |
| 14a,b,c,d,e | Durchbrüche |
| 15a,b,c,d,e | Feinstrukturkörper |

## Patentansprüche

1. Verfahren zur Herstellung von Feinstrukturkörpern wie Wärmetauscher, mechanische Feinfilter oder optische Gitter mit mehreren, nahe beieinanderliegenden, kanalartigen Durchbrüchen von hoher Formgenauigkeit, Maßhaltigkeit und Oberflächengüte, bei welchem in die Oberfläche zerspanbarer, vorzugsweise metallischer Folien (1) mehrere Nuten (3) mit über die Länge konstanter, frei vorgebbarer Querschnittsform mittels Formdiamanten (4a) eingebracht werden, wobei bei Nutlängen von mehr als 1000 μm die Formgenauigkeit der Nuten (3) hinsichtlich der Nutenbreite ca.± 1 μm bei kleinsten Stegbreiten von ca. 15 μm beträgt, und danach die Folien (1) in Abschnitte (13) zerschnitten werden, die zu dem Feinstrukturkörper (15a) gestapelt werden, dadurch gekennzeichnet, daß die zu nutende Folie (1) um den zylindrischen Dorn (2) einer Drehmaschine gespannt wird, wobei die quer zur Nutrichtung verlaufenden Stoßkanten (5) der Folie (1) mittels einer Spannvorrichtung (7) in eine axiale Ausnehmung (6) des zylindrischen Dorns (2) hineingedrückt werden, und daß nach dem Einbringen der Nuten (3) mit dem Formdiamanten (4a) mittels eines Feinstellvorschubs (Pfeile A, B) die Folie (1) in beschnitte (13) gewünschter Länge und Breite zerschnitten wird.

2. Verfahren zur Herstellung von Feinstrukturkörpern wie Wärmetauscher, mechanische Feinfilter oder optische Gitter mit mehreren, nahe beieinanderliegenden, kanalartigen Durchbrüchen von hoher Formgenauigkeit, Maßhaltigkeit und Oberflächengüte, bei welchem in die Oberfläche zerspanbarer, vorzugsweise metallischer, auf einer Vakuumspannvorrichtung (9) aufgespannter Folien (1) mehrere Nuten (3) mit über die Länge konstanter, frei vorgebbarer Querschnittsform mittels Formdiamanten (4b) eingebracht werden, wobei bei Nutlängen von mehr als 1000 μm die Formgenauigkeit der Nuten (3) hinsichtlich der Nutenbreite ca ± 1 μm bei kleinsten Stegbreiten von ca. 15 μm beträgt, und danach die Folie (1) in Abschnitte (13) zerschnitten wird, die zu dem Feinstrukturkörper (15a) gestapelt werden dadurch gekennzeichnet, daß die zu nutende Folie (1) auf eine geschliffene Sintermetallplatte (10) der Vakuumspannvorrichtung (9) eines Bearbeitungstisches (8) aufgespannt wird, wobei zum Einbringen der Nuten (1) der Bearbeitungstisch (8) in zwei zueinander senkrechten Richtungen (X,Y) gegenüber dem auf einer Frässpindel (12) fixierten Formdiamanten (4b) bewegt wird, der in Z-Richtung verstellbar ist, worauf die Folie (1) in Abschnitte (13) gewünschter Länge und Breite zerschnitten wird.

## Claims

1. Process for manufacturing fine-structured bodies, such as heat exchangers, mechanical fine-mesh filters or optical gratings, with a plurality of closely spaced, channel-like perforations of highly uniform shape, dimensions and surface quality, wherein a plurality of grooves (3), having a cross-sectional configuration variable within very wide limits, which is constant over the length, are cut into the surface of incisable, preferably metallic sheets (1), the dimensional precision of the grooves (3) being approximately ±1 μm in respect of the groove width for groove lengths in excess of 1000 μm and smallest wall thicknesses of approximately 15 μm, and then the sheets (1) are cut into portions (13), which are stacked to form the fine-structured body (15a), characterised in that the sheet (1) to be grooved is clamped around the cylindrical mandrel (2) of a lathe, the impact edges (5) of the sheet (1) extending transversely relative to the direction of the grooves and being pressed into an axial recess (6) in the cylindrical mandrel (2) by means of a chuck (7), and in that, after the grooves (3) have been introduced by means of the diamond cutting tool (4a), the sheet (1) is cut into portions (13) of a desired length and width by means of a precision-adjusting feed (arrows A, B).

2. Process for manufacturing fine-structured bodies, such as heat exchangers, mechanical fine-mesh filters or optical gratings, with a plurality of closely spaced, channel-like perforations of hightly uniform shape, dimensions and surface quality, wherein a plurality of grooves (3), having a cross-sectional configuration variable within very wide limits, which is constant over the length, are cut into the surface of incisable, preferably metallic sheets (1), which are clamped on a vacuum clamping device (9), the dimensional precision of the grooves (3) being approximately ±1 μm in respect of the groove width for groove lengths in excess of 1000 μm and smallest wall thicknesses of approximately 15 μm, and then the sheet (1) is cut into portions (13), which are stacked to form the fine-structured body (15a), characterised in that the sheet (1) to be grooved is clamped onto a ground sintered metal plate (10) of the vacuum clamping device (9) of a processing table (8), whereby, in order to introduce the grooves (3), the processing table (8) is moved in two directions (X, Y), which extend at right angles to one another relative to the diamond cutting tool (4b), which is secured on a milling spindle (12) and is adjustable in the direction Z, whereupon the sheet (1) is cut into portions (13) of a desired length and width.

## Revendications

1. Procédé de production de corps à structure fine tels que des échangeurs thermiques, filtres fins mécaniques ou réseau optique avec plusieurs rainures en forme de canaux, juxtaposées, avec une précision de forme, précision dimensionnelle et qualité de surface élevées, dans lequel sont réalisées sur la surface des feuilles (1) usinables, métalliques de préférence, grâce à des diamants profilés (4a), plusieurs rainures (3) avec sur toute leur longueur des profils de section constante choisis à volonté, avec, pour des longueurs de rainure supérieures à 1000 μm une précision de forme des rainures (3) en largeur d'environ ± 1 μm pour des largeurs de paroi les plus minces d'environ 15 μm, et ensuite les feuilles (1) sont coupées en morceaux (13) qu'on empile pour former le corps à structure fine (15a), procédé caractérisé en ce que la feuille (1) à rainurer est montée sur le mandrin cylindrique (2) d'un tour, les bords (5) de la feuille (1) s'étendant transversalement au sens de la rainure étant enfoncés au moyen d'un dispositif de serrage (7) dans un évidement axial (6) du mandrin cylindrique (2), et en ce qu'après usinage des rainures (3) avec le diamant profilé (4a) au moyen d'une avance de précision (flèches A, B), la feuille (1) est découpée en morceaux (13) de longueur et de largeur souhaitées.

2. Procédé de production de corps à structure fine tels que des échangeurs thermiques, filtres mécaniques fins ou réseaux optiques avec plusieurs rainures en forme de canaux juxtaposées avec une précision de forme, précision dimensionnelle et qualité de surface élevées dans lequel sont réalisées sur la surface des feuilles (1) usinables, de préférence métalliques, montées sur un dispositif de serrage (9) sous vide, grâce à des diamants profilés (4b), plusieurs rainures (3) avec sur toute leur longueur des profils de section constante choisis à volonté, avec pour des longueurs de rainure supérieures à 1000 μm une précision de forme des rainures (3) en largeur d'environ ± 1 μm pour des largeurs de paroi les plus minces d'environ 15 μm, et ensuite la feuille (1) est découpée en morceaux (13) qu'on empile pour former le corps à structure fine (15a), procédé caractérisé en ce qu'on monte la feuille (1) à rainurer sur une plaque (10) de métal fritté polie du dispositif de maintien sous vide (9) d'une table d'usinage (8), en déplaçant, pour implanter les rainures (1), la table d'usinage (8) en deux sens (X, Y) orthogonaux par rapport au diamant (4b) profilé fixé sur une broche de fraisage (12), qu'on peut régler dans le sens Z, puis la feuille (1) est découpée en morceaux (13) de longueur et largeur souhaitées.

## Fig. 1

## Fig. 2

Fig. 3

Fig. 4

Fig. 5

14c

15c

Fig. 6a

15d

14d

Fig. 6b

14d

Fig. 7

15e

14e